# EUROPÄISCHE PATENTSCHRIFT

(11) **EP 0 655 682 B1**
(45) Veröffentlichungstag und Bekanntmachung des Hinweises auf die Patenterteilung: **31.05.2000**
(21) Anmeldenummer: 93119187.8
(22) Anmeldetag: 26.11.1993
(51) Int. Cl.: G06F 9/46

(54) **Recheneinheit mit mehreren ausführbaren Tasks**
Multitasking arithmetic unit
Unité arithmétique avec plusieures tâches

(43) Veröffentlichungstag der Anmeldung: 31.05.1995
(73) Patentinhaber: SIEMENS AKTIENGESELLSCHAFT, 80333 München (DE)
(72) Erfinder: Sand, Manfred, Dipl.-Ing., D-92224 Amberg (DE); Trummer, Georg, Dipl.-Ing., D-92224 Amberg (DE)

(56) Entgegenhaltungen:
- EP-A- 0 534 884
- US-A- 4 145 735
- IBM TECHNICAL DISCLOSURE BULLETIN. Bd. 19, Nr. 11 , April 1977 , NEW YORK US Seiten 4354 - 4356 DUGGAN 'Programmable Priority for Cycle Steal'

## Beschreibung

Die vorliegende Erfindung betrifft eine Recheneinheit, insbesondere eine Zentraleinheit einer modularen speicherprogrammierbaren Steuerung, mit einer hochprioren Task, einer niederprioren, stets ausfuhrbaren Task und weiteren Tasks mit Prioritäten zwischen der hoch- und der niederprioren Task, wobei die Tasks durch die Recheneinheit ausführbar sind, wobei die Recheneinheit zu einem bestimmten Zeitpunkt nur eine der Tasks ausfuhren kann, wobei zumindest der hochprioren Task und den weiteren Tasks je eine Anforderungs- und eine Beendigungsbedingung zugeordnet sind, wobei die Recheneinheit bei Auftreten der Beendigungsbedingung der momentan ausgeführten Task die Ausführung der momentan ausgeführten Task beendet und die Ausführung der Task mit der nächstniederprioren Priorität aufnimmt, deren Anforderungsbedingung erfüllt und deren Beendigungsbedingung nicht erfüllt ist.

Derartige Recheneinheiten sind als Zentraleinheiten speicherprogrammierbarer Steuerungen weit verbreitet. In solchen Zentraleinheiten läuft stets die höchstpriore anstehende Task ab, bis sie entweder vollständig ausgeführt ist oder aber von einer noch höherprioren Task verdrängt wird, deren Anforderungsbedingung während der Ausführung der Task auftritt. Dieses Verfahren ist insofern nachteilig, als die Recheneinheit durch die höchste aller Tasks blockierbar ist.

Es sind auch Recheneinheiten bekannt, bei denen allen Tasks von der Recheneinheit Zeitscheiben zugeordnet werden, so daß alle Tasks von Zeit zu Zeit gemäß den ihnen zustehenden Zeitscheiben ausgeführt werden. Eine Priorisierung der Tasks ist dabei nur dadurch möglich, daß manchen Tasks mehr Zeitscheiben zugeordnet werden als anderen. Dagegen ist es nicht möglich, sofort auf Anforderungen hochpriorer Tasks zu reagieren.

Aus dem IBM Technical Disclosure Bulletin, Band 19, Nr. 11, April 1977, Seiten 4354 bis 4356 ist ein elektronisches System bekannt, das mehrere Tasks ausführen kann. Jeder Task ist dabei eine Priorität zugeordnet. In der Regel wird die Task mit der höchsten Priorität ausgeführt. Nach Ablauf einer Maximalzeit wird aber zwangsweise auf eine andere Task umgeschaltet. Die Maximalzeit ist für alle Tasks gleich.

Aus der US-A-4 145 735 ist eine ähnliche Recheneinheit bekannt, wobei allerdings zusätzlich die Maximalzeit um so kürzer ist, je höher die Priorität einer Task ist. Darüber hinaus kann eine Task nicht mehr aufgerufen werden, wenn ihre Maximalzeit abgelaufen ist.

Aus EP-A-0 534 884 ist ein Echtzeitsystem bekannt, in dem jede Task nach einer vorgebbaren Zahl von Prozessorzyklen abgebrochen wird. Dieses Dokument gibt aber keinen Hinweis darauf, daß eine abgebrochene Task nach einer Sperrzeit wieder aufgenommen werden soll.

Die Aufgabe der vorliegenden Erfindung besteht darin, eine Recheneinheit zur Verfügung zu stellen, bei der einerseits ein schnelles Reagieren auf das Anfordern hochpriorer Tasks gewährleistet ist und dennoch ebenfalls gewährleistet ist, daß die Recheneinheit nicht durch die hochpriore Task blockiert wird.

Die Aufgabe wird durch die Merkmale des Anspruchs 1 gelöst. Wenn die Maximalrechenzeit vom Anwender vorgebbar ist, kann der Anwender die Maximalrechenzelt je nach Bedarf einstellen.

Jedes komplexe elektronische System kann sich aufgrund eines Systemfehlers selbst blockieren. Eine derartige Blockierung der Recheneinheit durch einen recheneinheitinternen Fehler ist von außen erkennbar, im Regelfall sogar behebbar, wenn die hochpriore Task Kommunikationsaufträge zu anderen, mit der Recheneinheit über ein Bussystem verbundenen Einheiten sendet und Kommunikationsaufträge von den anderen Einheiten empfängt. Dadurch ist nämlich gewährleistet, daß die Recheneinheit von außen ansprechbar bleibt, auch wenn sie sich selbst intern blockiert hat.

Wenn die weiteren Tasks zumindest eine hochpriore Kommunikationstask umfassen, der die zweithöchste Priorität zugeordnet ist, und die hochpriore Kommunikationstask von der hochprioren Task empfangene Kommunikationsaufträge auswertet und zumindest teilweise bearbeitet, ist gewährleistet, daß empfangene Kommunikationsaufträge von der Recheneinheit auch bearbeitet werden.

Wenn die weiteren Tasks eine zyklisch zu wiederholende Task und eine niederpriore Kommunikationstask umfassen, wobei der zyklisch zu wiederholenden Task die zweitniedrigste und der niederprioren Kommunikationstask die niedrigste Priorität zugeordnet sind, der niederprioren Kommunikationstask von der hochprioren Kommunikationstask Kommunikationsaufträge übermittelt werden, die niederpriore Kommunikationstask von der hochprioren Kommunikationstask übermittelte Kommunikationsaufträge bearbeitet und bei Ausführung der zyklisch zu wiederholenden Task die Recheneinheit die Ausführung der zyklisch zu wiederholenden Task nach einer Zyklusrechenzeit abbricht und die Ausführung der niederprioren Kommunikationstask aufnimmt, kann die Auswertung und das Bearbeiten der Kommunikationsaufträge durch die hochpriore Kommunikationstask auf das Bearbeiten hochpriorer Kommunikationsaufträge beschränkt werden. Dennoch ist gewährleistet, daß alle Kommunikationsaufträge nach und nach abgearbeitet werden.

Weitere Vorteile und Einzelheiten ergeben sich aus der nachfolgenden Beschreibung eines Ausführungsbeispieles, anhand der Zeichnung und in Verbindung mit den weiteren Ansprüchen. Dabei zeigen:
- FIG 1: ein Blockschaltbild einer speicherprogrammierbaren Steuerung und
- FIG 2: die Reihenfolge der Tasks.

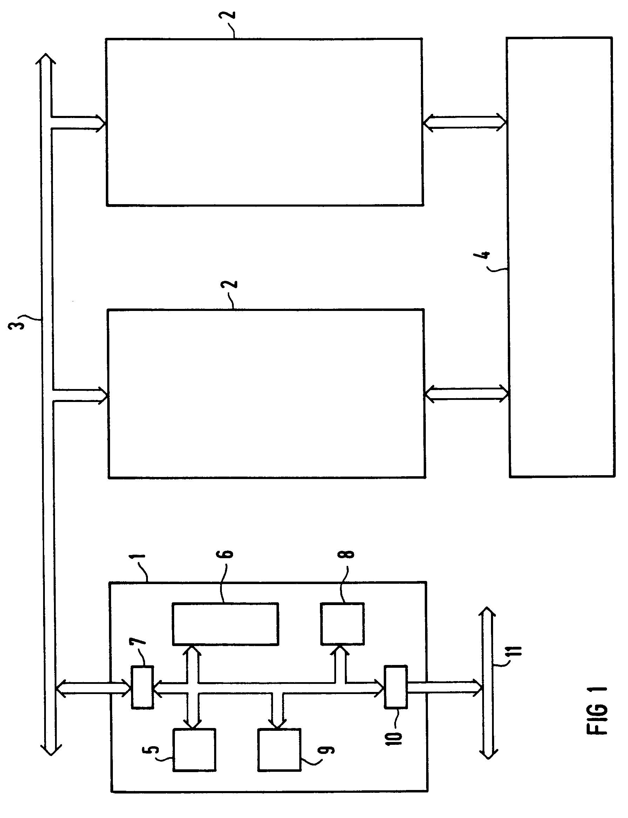

Gemäß FIG 1 besteht eine modulare speicherprogrammierbare Steuerung aus einer Zentraleinheit 1 sowie Peripheriebaugruppen 2, die über einen Gerätebus 3 miteinander verbunden sind. Über die Peripheriebaugruppen 2 kann die Zentraleinheit 1 Zustände einer nicht näher dargestellten technischen Anlage 4 abfragen und Stellbefehle an die Anlage 4 ausgeben.

Die Zentraleinheit 1 der speicherprogrammierbaren Steuerung weist intern einen Mikroprozessor 5 auf, der ein Anwenderprogramm abarbeitet. Das Anwenderprogramm ist im Speicher 6 abgespeichert, der ein Schreib-Lese-Speicher (RAM) ist. Gemäß diesem Programm greift der Mikroprozessor 5 über den Buscontroller 7 auf die Peripherieeinheiten 2 zu und steuert so die technische Anlage 4.

Im Speicher 6 ist nicht nur das Anwenderprogramm abgespeichert, sondern auch das sogenannte Prozeßabbild, d.h. die von den Peripherieeinheiten 2 eingelesenen Eingangssignale und die an die Peripherieeinheiten 2 auszugebenden Ausgangssignale. Ferner dient der Speicher 6 auch als Arbeits- und Zwischenspeicher. Im Speicher 8, der als Festwertspeicher (z.B. als EEPROM) ausgebildet ist, ist das Betriebssystem des Mikroprozessors 5 abgespeichert.

Ferner weist die Zentraleinheit noch einen Timerbaustein 9 und eine Kommunikationsschnittstelle 10 auf. Über den Timer 9 werden dem Prozessor 5 Zeiten zur Verfügung gestellt, so daß er z.B. weiß, welche Zeit seit einem bestimmten Ereignis vergangen ist. Über die Kommunikationsschnittstelle 11 kann der Prozessor 5 auf den Vernetzungsbus 11 zugreifen. Dadurch kann die Zentraleinheit 1 mit anderen Einheiten kommunizieren. Die anderen Einheiten können beispielsweise ein Programmiergerät zum Programmieren und/oder Überwachen der Zentraleinheit 1 sein. Ebenso können die anderen Einheiten selbst Zentraleinheiten speicherprogrammierbarer Steuerungen sein.

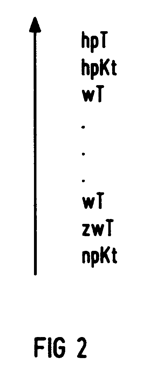

Um eine effiziente Abarbeitung aller von der Zentraleinheit 1 abzuarbeitenden Aufgaben zu gewährleisten, sind die einzelnen Aufgaben in voneinander getrennte Tasks aufgeteilt, die von der Zentraleinheit 1 ausgeführt werden können. Jeder Task ist dabei eine Priorität zugeordnet. Die Tasks sind mit ihren zugehörigen Prioritäten in FIG 2 dargestellt.

Gemäß FIG 2 ist die Task mit der höchsten Priorität die hochpriore Task hpT. Diese Task hat die Aufgabe, Kommunikationsaufträge zu anderen, mit der Zentraleinheit 1 über den Vernetzungsbus 11 verbundenen Einheiten zu senden und Kommunikationsaufträge von diesen Einheiten zu empfangen.

Die Task mit der zweithöchsten Priorität ist die hochpriore Kommunikationstask hpKt. Diese Task wertet die von der hochprioren Task empfangenen Kommunikationsaufträge aus und entscheidet dann, ob die empfangenen Kommunikationsaufträge hoch- oder niederprior sind. Sind die empfangenen Kommunikationsaufträge hochprior, so bearbeitet die hochpriore Task die empfangenen Kommunikationsaufträge selbst. Ansonsten übermittelt sie die empfangenen Kommunikationsaufträge an die niederpriore Kommunikationstask npKt. Die niederpriore Kommunikationstask npKt bearbeitet also die niederprioren Kommunikationsaufträge, die ihr von der hochprioren Kommunikationstask hpKt übermittelt werden. Der niederprioren Kommunikationstask npKt ist die niedrigste Priorität zugeordnet.

Die hochpriore Kommunikationstask hpKt ist im vorliegenden Fall als eigenständige Task implementiert. Sie könnte aber auch Teil der hochprioren Task hpT sein.

Die Task mit der zweitniedrigsten Priorität ist die sogenannte zyklisch zu wiederholende Task zwT, die zyklisch immer wieder ausgeführt wird, wenn keine höherpriore Task auszuführen ist.

Außer dem obenstehend namentlich erwähnten Tasks sind durch die Zentraleinheit 1 noch eine Reihe weiterer Tasks wT ausführbar, auf die im folgenden nicht näher eingegangen wird. Diese Tasks umfassen beispielsweise den Timerrefresh über den Timerbaustein 9, Zeitalarme verschiedener Art, Prozeßalarme von der gesteuerten technischen Anlage 4 sowie zentraleinheitinterne Alarme.

Der Mikroprozessor 5 der Zentraleinheit 1 kann zu einem bestimmten Zeitpunkt nur eine der Tasks ausführen. Jeder Task - außer der zyklisch zu wiederholenden Task zwT - ist daher eine Anforderungs- und eine Beendigungsbedingung zugeordnet. Wenn die Anforderungsbedingung einer Task auftritt, deren Priorität höher ist als die der momentan ausgeführten Task, so beendet die Zentraleinheit 1 die Ausführung der momentan ausgeführten Task und nimmt die Ausführung der Task auf, deren Anforderungsbedingung soeben eingetreten ist. Die Ausführung dieser Task wird im Regelfall erst dann beendet, wenn die Anforderungsbedingung einer Task mit noch höherer Priorität auftritt oder aber wenn die Beendigungsbedingung der Task auftritt. Die Zentraleinheit 1 führt die Tasks also ereignisgetrieben aus.

Wie obenstehend ausgeführt, ist im vorliegenden Fall die Recheneinheit die Zentraleinheit eines Automatisierungssystems. Unter Umständen kann es daher geschehen, daß die Zentraleinheit 1 sehr schnell auf eine geänderte Prozeßbedingung reagieren muß. Andererseits können die von der hochprioren Task hpT abgewickelten Kommunikationsaufträge unter Umständen sehr lange dauern. Um daher zu gewährleisten, daß die Zentraleinheit 1 unter allen Umständen rechtzeitig auf geänderte Prozeßbedingungen schnell genug reagiert, wird wie folgt verfahren:

Wenn die Zentraleinheit 1 die Ausführung der hochprioren Task hpT aufnimmt, wird ein Zeitzähler im Timerbaustein 9 gestartet. Wenn die von diesem Zeitzähler gemessene Zeit eine vom Anwender vorgebbare Maximalrechenzeit übersteigt, bricht die Zentraleinheit 1 die Ausführung der hochprioren Task hpT ab. Das Abbrechen der hochprioren Task hpT erfolgt nach Ablauf der Maximalrechenzeit unabhängig davon, ob die Beendigungsbedingung der hochprioren Task hpT aufgeteten ist oder nicht. Die Zentraleinheit 1 nimmt daraufhin die Ausführung der Task mit nächstniedrigerer Priorität auf, deren Anforderungsbedingung erfüllt ist. Dadurch ist gewährleistet, trotz umfangreicher Kommunikationsaufträge die Zentraleinheit 1 auf geänderte Prozeßzustände reagieren kann. Die Ausführung der hochprioren Task hpT wird erst nach einer Sperrzeit wieder aufgenommen, die ebenfalls vom Anwender vorgebbar ist.

Wie in der Beschreibungseinleitung erwähnt, kann es - z.B. bei fehlerhafter Programmierung des Steuerprogramms - vorkommen, daß die Zentraleinheit 1 sich selbst blockiert. Die Zentraleinheit 1 ist dann nicht mehr in der Lage, die technische Anlage 4 aktiv zu steuern. Aufgrund allgemeiner Programmierregeln bleibt aber gewährleistet, daß in der technischen Anlage 4 kein kritischer Zustand auftritt. Aufgrund der Tatsache, daß der hochprioren Task hpT die höchste Priorität zugeordnet ist, ist es aber auch bei einer Blockierung der Zentraleinheit 1 möglich, diese von außen anzusprechen. Dadurch kann evtl. die Blockierung der Zentraleinheit 1 von außen behoben werden.

Wie ebenfalls obenstehend erwähnt, ist der zyklisch zu wiederholenden Task zwT die zweitniedrigste und der niederprioren Kommunikationstask npKt die niedrigste Priorität zugeordnet. Da andererseits die zyklisch zu wiederholende Task stets ablauffähig ist, würde bei einer rein ereignisgesteuerten Zentraleinheit 1 die niederpriore Kommunikationstask npKt niemals ausgeführt werden. Daher wird - analog zum Abbrechen der hochprioren Task hpT - bei der Ausführung der zyklisch zu wiederholenden Task zwT die Zeit erfaßt, während derer diese Task ausgeführt wird. Wenn die Ausführungszeit eine vom Anwender vorgebbare Zyklusrechenzeit übersteigt, wird die Ausführung der zyklisch zu wiederholenden Task zwT abgebrochen und die Ausführung der niederprioren Kommunikationstask npKt aufgenommen.

Die Zeiten T_{z} und Tₖ, wahrend derer die Zentraleinheit 1 zuvor die zyklisch zu wiederholende Task zwT bzw. die niederpriore Kommunikationstask npKt ausgeführt hat, werden erfaßt und im Speicher 6 zwischengespeichert. Die Zyklusrechenzeit kann daher beispielsweise nach Art eines Zweipunktreglers auf Null gehalten werden, wenn das Verhältnis der Zeiten T_{z} und Tₖ eine gewisse Obergrenze überschreitet und auf unendlich bzw. einer festen Zeit gehalten werden, wenn das Verhältnis der Zeiten T_{z} und Tₖ eine Untergrenze unterschreitet.

Alternativ zur Zweipunktregelung ist es beispielsweise auch möglich, der niederprioren Kommunikationstask npKt eine Zeitscheibe vorwählbarer Länge zuzuordnen. Die niederpriore Kommunikationstask npKt wird in diesem Fall stets nach der Ausführung eines Zyklus der zyklisch zu wiederholenden Task zwT aufgerufen und ausgeführt.

Mit der oben beschriebenen Vorgehensweise ist gewährleistet, daß die Zentraleinheit 1 im Normalfall, d.h. wenn die hochpriore Task hpT nicht zuviel Rechenzeit erfordert, ereignisgetrieben wird. Andererseits sind definierte maximale Reaktionszeiten zur gesteuerten Anlage 4 hin gewährleistet, auch wenn Kommunikationsaufgaben anstehen, die höherprior sind und sehr lange dauern.

## Patentansprüche

1. Recheneinheit, insbesondere Zentraleinheit einer modularen speicherprogrammierbaren Steuerung, mit einer hochprioren Task (hpT), einer niederprioren, stets ausführbaren Task (zwT) und weiteren Tasks (z.B. hpKt, wT) mit Prioritäten zwischen der hoch- und der niederprioren Task (hpT, zwT),
- wobei die Tasks (hpT, hpKt, wT, zwT) durch die Recheneinheit (1) ausführbar sind,
- wobei die Recheneinheit (1) zu einem bestimmten Zeitpunkt nur eine der Tasks (hpT, hpKt, wT, zwT) ausführen kann,
- wobei zumindest der hochprioren Task (hpT) und den weiteren Tasks (hpKt, wT) je eine Anforderungs- und eine Beendigungsbedingung zugeordnet sind, wobei die Recheneinheit (1) bei Auftreten der Beendigungsbedingung der momentan ausgeführten Task (z.B. hpKt) die Ausführung der momentan ausgeführten Task (hpKt) beendet und die Ausführung der Task (z.B. wT) mit der nächstniedrigeren Priorität aufnimmt, deren Anforderungsbedingung erfüllt und deren Beendigungsbedingung nicht erfüllt ist,
- wobei die Recheneinheit (1) die Ausführung einer Task (z.B. wT), die nicht die hochpriore Task (hpT) ist, bei Auftreten einer Anforderungsbedingung einer Task (z.B. hpT) mit höherer Priorität abbricht und die Ausführung der höherprioren Task (hpT) aufnimmt,
- wobei die Recheneinheit (1) die Ausführung der hochprioren Task (hpT) nach einer Maximalrechenzeit abbricht und die Ausführung der Task (z.B. wT) mit der nächstniedrigeren Priorität aufnimmt, deren Anforderungsbedingung erfüllt und deren Beendigungsbedingung nicht erfüllt ist, auch wenn die Beendigungsbedingung der hochprioren Task (hpT) nicht aufgetreten ist,
- wobei die Recheneinheit (1) die Ausführung der hochprioren Task (hpT) nach einer Sperrzeit wieder aufnimmt.

2. Recheneinheit nach Anspruch 1,
**dadurch gekennzeichnet**,
daß die Maximalrechenzeit vom Anwender vorgebbar ist.

3. Recheneinheit nach Anspruch 1 oder 2,
**dadurch gekennzeichnet**,
daß die hochpriore Task (hpT) Kommunikationsaufträge zu anderen, mit der Recheneinheit (1) über ein Bussystem (11) verbundenen Einheiten sendet und Kommunikationsaufträge von den anderen Einheiten empfängt.

4. Recheneinheit nach Anspruch 3,
**dadurch gekennzeichnet,**
- daß die weiteren Tasks (wT) zumindest eine hochpriore Kommunikationstask (hpKt) umfassen, der die zweithöchste Priorität zugeordnet ist und
- daß die hochpriore Kommunikationstask (hpKt) von der hochprioren Task (hpT) empfangene Kommunikationsaufträge auswertet und zumindest teilweise bearbeitet.

5. Recheneinheit nach Anspruch 4,
**dadurch gekennzeichnet,**
- daß die weiteren Tasks (wT) eine zyklisch zu wiederholende Task (zwT) und eine niederpriore Kommunikationstask (npKt) umfassen, wobei der zyklisch zu wiederholenden Task (zwT) die Zweitniedrigste und der niederprioren Kommunikationstask (npKt) die niedrigste Priorität zugeordnet sind,
- daß der niederprioren Kommunikationstask von der hochprioren Kommunikationstask (hpKt) Kommunikationsaufträge übermittelt werden,
- daß die niederpriore Kommunikationstask (npKt) von der hochprioren Kommunikationstask (hpKt) übermittelte Kommunikationsaufträge bearbeitet und
- daß bei Ausführung der zyklisch zu wiederholenden Task (zwT) die Recheneinheit (1) die Ausführung der zyklisch zu wiederholenden Task (zwT) nach einer Zyklusrechenzeit abbricht und die Ausführung der niederprioren Kommunikationstask (npKt) aufnimmt.

6. Recheneinheit nach Anspruch 5,
**dadurch gekennzeichnet,**
daß die Zyklusrechenzeit von den Zeiten (T_{z},Tₖ) abhängt, während derer die Recheneinheit (1) zuvor die zyklisch zu wiederholende Task (zwT) bzw. die niederpriore Kommunikationstask (npKt) ausgeführt hat.

7. Automatisierungssystem, insbesondere modulare speicherprogrammierbare Steuerung, mit einer Recheneinheit (1) nach einem der Ansprüche 1 bis 6.

## Claims

1. Arithmetic unit, in particular a central processing unit of a modular programmable controller, having a high-priority task (hpT), a low-priority task (zwT) which can always be executed, and further tasks (for example hpKt, wT) with priorities between the high-priority task and the low-priority task (hpT, zwT),
- wherein the tasks (hpT, hpKt, wT, zwT) can be executed by the arithmetic unit (1),
- wherein the arithmetic unit (1) at a certain instant can execute only one of the tasks (hpT, hpKt, wT, zwT),
- wherein a respective request condition and a termination condition are assigned to at least the high-priority task (hpT) and the further tasks (hpKt, wT), wherein upon the occurrence of the termination condition of the task (for example hpKt) which is being executed at the present time, the arithmetic unit (1) terminates the execution of the task (hpKt) which is being executed at the present time and takes up the execution of the task (for example wT) with the next lowest priority, the request condition of which is fulfilled and the termination condition of which is not fulfilled,
- wherein the arithmetic unit (1) terminates the execution of a task (for example wT) which is not the high-priority task (hpT) in the event of the occurrence of a request condition of a task (for example hpT) with higher priority and takes up the execution of the higher priority task (hpT),
- wherein the arithmetic unit (1) terminates the execution of the high-priority task (hpT) after a maximum calculating time and takes up the execution of the task (for example wT) with the next lowest priority, the request condition of which is fulfilled and the termination condition of which is not fulfilled, even if the termination condition of the high-priority task (hpT) has not occurred, and
- wherein the arithmetic unit (1) takes up the execution of the high-priority task (hpT) again after a blocking time.

2. Arithmetic unit according to claim 1,
characterised in that the maximum calculating time can be specified by the user.

3. Arithmetic unit according to claim 1 or 2,
characterised in that the high-priority task (hpT) sends communication jobs to other units connected to the arithmetic unit (1) by way of a bus system (11) and receives communication jobs from the other units.

4. Arithmetic unit according to claim 3,
characterised
- in that the further tasks (wT) include at least one high-priority communication task (hpKt), to which the second highest priority is assigned, and
- in that the high-priority communication task (hpKt) evaluates and at least partially processes communication jobs received from the high-priority task (hpT).

5. Arithmetic unit according to claim 4,
characterised
- in that the further tasks (wT) include a task (zwT) to be repeated cyclically and a low-priority communication task (npKt), the second lowest priority being assigned to the task (zwT) to be repeated cyclically and the lowest priority being assigned to the low-priority communication task (npKt),
- in that communication jobs are transmitted to the low-priority communication task by the high-priority communication task (hpKt),
- in that the low-priority communication task (npKt) processes communication jobs transmitted by the high-priority communication task (hpKt), and
- in that during the execution of the task (zwT) to be repeated cyclically, the arithmetic unit (1) terminates the execution of the task (zwT) to be repeated cyclically after one cycle calculating time and takes up the execution of the low-priority communication task (npKt).

6. Arithmetic unit according to claim 5,
characterised in that the cycle calculating time depends on the times (T_{z}, Tₖ) during which the arithmetic unit (1) has previously executed the task (zwT) to be repeated cyclically or the low-priority communication task (npKt).

7. Automation system, in particular modular programmable controller, having an arithmetic unit (1) according to one of claims 1 to 6.

## Revendications

1. Unité de calcul, notamment unité centrale d'un automate programmable modulaire, comportant une task (hpT) à haute priorité, une tâche (zwT) à basse priorité, pouvant toujours être exécutée, et des tâches (par exemple hpKt, wT) supplémentaires à priorité comprise entre celle de la tâche (hpT) à haute priorité et celle de la tâche (zwT) à basse priorité,
- les tasks (hpT, hpKt, wT, zwT) pouvant être exécutées par l'unité (1) de calcul,
- l'unité (1) de calcul ne pouvant exécuter à un instant déterminé que l'une des tasks (hpT, hpKt, wT, zwT),
- une condition de demande et une condition d'achèvement étant associées chaque fois au moins à la task (hpT) à haute priorité et aux tasks (hpKt, wT) supplémentaires, l'unité (1) de calcul mettant fin, en cas d'apparition de la condition d'achèvement de la task (par exemple hpKt) exécutée à ce moment, à l'exécution de la task (hpKt) exécutée à ce moment et acceptant l'exécution de la task (par exemple wT) ayant la priorité juste inférieure dont la condition de demande est remplie et dont la condition d'achèvement n'est pas remplie,
- l'unité (1) de calcul interrompant l'exécution d'une task (par exemple wT) qui n'est pas la task (hpT) à haute priorité lors de l'apparition d'une condition de demande d'une task (par exemple hpT) à priorité supérieure et acceptant l'exécution de la task (hpT) à haute priorité,
- l'unité (1) de calcul interrompant l'exécution de la task (hpT) à haute priorité après une durée de calcul maximum et acceptant l'exécution de la task (par exemple wT) à priorité juste inférieure dont la condition de demande est remplie et dont la condition d'achèvement n'est pas remplie, même si la condition d'achèvement de la task (hpT) à haute priorité n'est pas apparue,
- l'unité (1) de calcul reprenant l'exécution de la task (hpT) à haute priorité après une durée de blocage.

2. Unité de calcul suivant la revendication 1, caractérisée en ce que la durée de calcul maximum peut être prescrite par l'utilisateur.

3. Unité de calcul suivant la revendication 1 ou 2, caractérisée en ce que la task (hpT) à haute priorité envoie des instructions de communication aux autres unités reliées à l'unité (1) de calcul par l'intermédiaire d'un système (11) de bus et reçoit des instructions de communication des autres unités.

4. Unité de calcul suivant la revendication 3, caractérisée en ce que
- les tasks (wT) supplémentaires comprennent au moins une task (hpKt) de communication à haute priorité à laquelle est associée la deuxième priorité la plus haute et
- la task (hpKt) de communication à haute priorité évalue et traite au moins partiellement des instructions de communication reçues de la task (hpT) à haute priorité.

5. Unité de calcul suivant la revendication 4, caractérisée en ce que
- les tasks (wT) supplémentaires comprennent une task (zwT) à répéter cycliquement et une task (npKt) de communication à basse priorité, la deuxième priorité la plus basse étant associée à la task (zwT) à répéter cycliquement et la priorité la plus basse étant associée à la task (npKt) de communication à basse priorité,
- des instructions de communication sont transmises par la task (hpKt) de communication à haute priorité à la task de communication à basse priorité,
- la task (npKt) de communication à basse priorité traite des instructions de communication transmises par la task (hpKt) de communication à haute priorité et
- lors de l'exécution de la task (zwT) à répéter cycliquement, l'unité (1) de calcul interrompt après une durée de calcul cyclique l'exécution de la task (zwT) à répéter cycliquement et accepte l'exécution de la task (npKt) de communication à basse priorité.

6. Unité de calcul suivant la revendication 5, caractérisée en ce que la durée de calcul cyclique dépend des durées (T_{z}, Tₖ) pendant lesquelles l'unité (1) de calcul a exécuté auparavant la task (zwT) à répéter cycliquement et la task (npKt) de communication à basse priorité.

7. Système d'automatisation, notamment automate programmable modulaire, comportant une unité (1) de calcul suivant l'une des revendications 1 à 6.
